# EUROPEAN PATENT APPLICATION

(11) **EP 4 756 422 A1**
(43) Date of publication of application: **10.06.2026**
(21) Application number: 24848670.6
(22) Date of filing: 04.06.2024
(51) Int. Cl.: G01N 30/00, G01N 30/14, G01N 30/26

(54) **GAS CHROMATOGRAPH ANALYSIS SYSTEM, GAS CHROMATOGRAPH ANALYSIS APPARATUS, AND CONTROL METHOD**

(30) Priority: 31.07.2023 JP 2023124480
(71) Applicant: SHIMADZU CORPORATION, Kyoto-shi, Kyoto 604-8511 (JP)
(72) Inventor: KAWAMURA, Kazuhiro, Kyoto-shi, Kyoto 604-8511 (JP); OBAYASHI, Kenichi, Kyoto-shi, Kyoto 604-8511 (JP)
(74) Representative: Müller-Boré & Partner Patentanwälte PartG mbB
(86) International application number: PCT/JP2024/020338
(87) International publication number: WO 2025/028009

(57) **Abstract**

A gas chromatograph analysis system (1000) is a system for separating components in a sample gas introduced by a solid phase micro extraction method, the system comprising a gas chromatograph (200) and a control device (100). The gas chromatograph (200) includes a sample vaporization chamber (220) into which an adsorption part (SP1) is inserted, a gas supply source (B1) for supplying a carrier gas, an adjustment device (210) for adjusting a carrier gas amount, a separation column (CL1), and a detector (230). The control device controls the adjustment device such that a supply pressure becomes a first pressure during a desorption period, and controls the adjustment device such that the supply pressure becomes a second pressure after the desorption period ends.

## Description

### TECHNICAL FIELD

The present disclosure relates to a gas chromatograph analysis system, a gas chromatograph analyzer, and a control method.

### BACKGROUND ART

Conventionally, the Solid Phase Micro Extraction (SPME) method has been used as a method for introducing a sample gas into a gas chromatograph. Patent Literature 1 (Japanese Unexamined Patent Application Publication No. 2020-165847) describes introducing volatile components of beef into a gas chromatograph using the solid phase micro extraction method.

In Patent Literature 1, a sample of beef and an adsorption part (SPME) are placed in a container, and by heating the container at a temperature of 200°C for 15 minutes, the volatile components of the beef are adsorbed by the adsorption part. Thereafter, the adsorption part, having adsorbed the volatile components of the beef, is inserted into the sample vaporization chamber of the gas chromatograph. In the sample vaporization chamber, the adsorption part is heated, whereby the sample gas adsorbed by the adsorption part is desorbed. As a result, the desorbed sample gas is introduced into a separation column and detected for each component by a detector.

### CITATION LIST

### PATENT LITERATURE

[Patent Literature 1] Japanese Unexamined Patent Application Publication No. 2020-165847

### SUMMARY OF THE INVENTION

### TECHNICAL PROBLEM

In the introduction of a sample gas by such a solid phase micro extraction method, when a large amount of sample gas is adsorbed by the adsorption part, or when a sample gas with strong interaction with the adsorption part is adsorbed by the adsorption part, the desorption efficiency of the sample in the sample vaporization chamber may be reduced. When the desorption efficiency is reduced, the amount of sample gas introduced into the separation column per unit time becomes small, which could result in a broad peak shape in the chromatogram detected by the detector.

The present disclosure has been made to solve the above-described problems, and an object thereof is to provide a technology for suppressing a decrease in desorption efficiency when desorbing a sample from an adsorption part in a gas chromatograph analysis system into which a sample gas is introduced by the solid phase micro extraction method.

### SOLUTION TO PROBLEM

A gas chromatograph analysis system according to an aspect of the present disclosure is a gas chromatograph analysis system for separating components in a sample gas introduced by a solid phase micro extraction method, the system comprising: a gas chromatograph for separating components in the sample gas introduced by the solid phase micro extraction method; and a control device for controlling the gas chromatograph. The gas chromatograph includes: a sample vaporization chamber into which an adsorption part that has adsorbed the sample gas is inserted; a gas supply source for supplying a carrier gas to the sample vaporization chamber; an adjustment device for adjusting the amount of the carrier gas supplied to the sample vaporization chamber by a supply pressure applied to the carrier gas; a separation column into which the sample gas desorbed from the adsorption part is introduced from the sample vaporization chamber; and a detector for detecting components in the sample gas that has passed through the separation column. The control device controls the adjustment device such that the supply pressure becomes a first pressure during a desorption period in which the sample gas is desorbed from the adsorption part, and controls the adjustment device such that the supply pressure becomes a second pressure lower than the first pressure after the desorption period ends.

A gas chromatograph analyzer according to an aspect of the present disclosure is a gas chromatograph analyzer for separating components in a sample gas introduced by a solid phase micro extraction method, the analyzer comprising: a sample vaporization chamber into which an adsorption part that has adsorbed the sample gas is inserted; a gas supply source for supplying a carrier gas to the sample vaporization chamber; an adjustment device for adjusting the amount of the carrier gas supplied to the sample vaporization chamber by a supply pressure applied to the carrier gas; a separation column into which the sample gas desorbed from the adsorption part is introduced from the sample vaporization chamber; and a detector for detecting components in the sample gas that has passed through the separation column. The adjustment device applies a supply pressure of a first pressure to the carrier gas during a desorption period in which the sample gas is desorbed from the adsorption part, and applies a supply pressure of a second pressure lower than the first pressure to the carrier gas after the desorption period ends.

A control method for a gas chromatograph analyzer according to an aspect of the present disclosure is a control method for a gas chromatograph analyzer for separating components in a sample gas introduced by a solid phase micro extraction method. The gas chromatograph analyzer includes: a sample vaporization chamber into which an adsorption part that has adsorbed the sample gas is inserted; a gas supply source for supplying a carrier gas to the sample vaporization chamber; an adjustment device for adjusting the amount of the carrier gas supplied to the sample vaporization chamber by a supply pressure applied to the carrier gas; a separation column into which the sample gas desorbed from the adsorption part is introduced from the sample vaporization chamber; and a detector for detecting components in the sample gas that has passed through the separation column. The control method includes, as a process executed by a computer that controls the gas chromatograph analyzer: a step of controlling the adjustment device such that the supply pressure becomes a first pressure during a desorption period in which the sample gas is desorbed from the adsorption part; and a step of controlling the adjustment device such that the supply pressure becomes a second pressure lower than the first pressure after the desorption period ends.

### ADVANTAGEOUS EFFECTS OF INVENTION

According to the present disclosure, in a gas chromatograph analysis system into which a sample gas is introduced by the solid phase micro extraction method, it is possible to suppress a decrease in desorption efficiency when desorbing a sample from an adsorption part.

### BRIEF DESCRIPTION OF DRAWINGS

[FIG. 1] FIG. 1 is a diagram showing a schematic configuration of a gas chromatograph analysis system according to the present embodiment.
[FIG. 2] FIG. 2 is a diagram for explaining adsorption and desorption of a sample to and from an adsorption part.
[FIG. 3] FIG. 3 is a diagram showing a flowchart for increasing the supply pressure of a carrier gas during thermal desorption.
[FIG. 4] FIG. 4 is a timing chart showing the supply pressure and the column oven temperature in the present embodiment.

### DESCRIPTION OF EMBODIMENTS

### [Embodiment]

The present embodiment will be described in detail with reference to the drawings. Note that the same or corresponding parts in the drawings are denoted by the same reference numerals, and a description thereof will not be repeated in principle.

### <Configuration of Gas Chromatograph Analysis System>

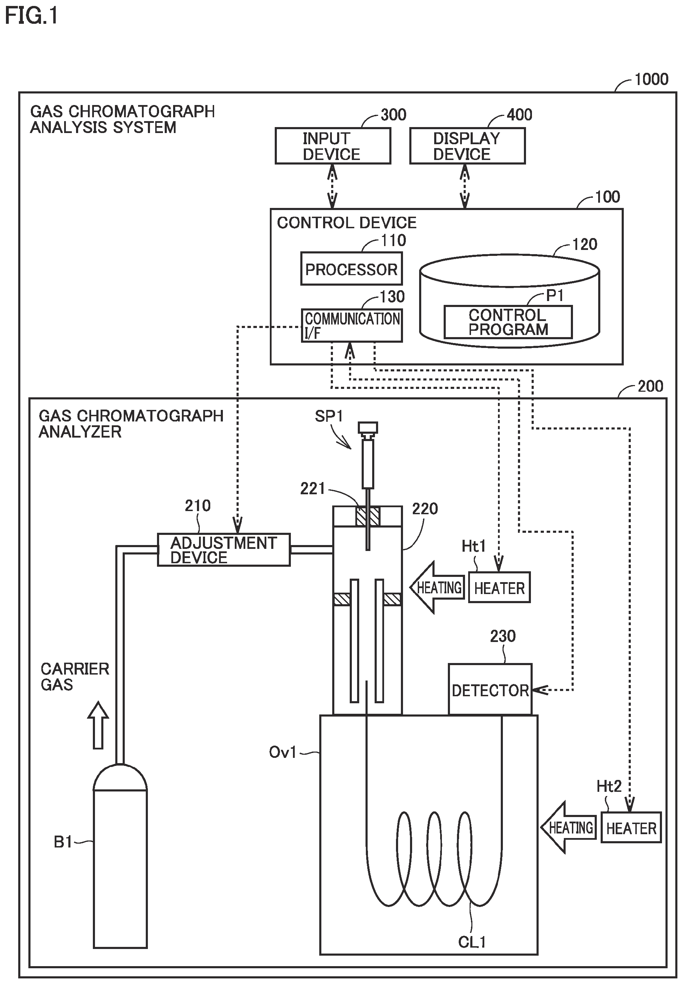

FIG. 1 is a diagram showing a schematic configuration of a gas chromatograph analysis system 1000 according to the present embodiment. The gas chromatograph analysis system 1000 includes a control device 100, a gas chromatograph 200, an input device 300, and a display device 400.

The gas chromatograph 200 has a gas supply source B1, an adjustment device 210, a sample vaporization chamber 220, a column oven Ov1, a separation column CL1, a detector 230, and heaters Ht1 and Ht2. Note that the heater Ht1 may correspond to a "first heating device" in the present disclosure. The heater Ht2 may correspond to a "second heating device" in the present disclosure.

The gas supply source B1 supplies a carrier gas to the sample vaporization chamber 220. The gas supply source B1 is, for example, a gas tank storing the carrier gas. The carrier gas is, for example, helium (He). The adjustment device 210 adjusts the flow rate of the carrier gas supplied from the gas supply source B1 by a supply pressure applied to the carrier gas, based on a control signal received from the control device 100. As shown in FIG. 1, the adjustment device 210 is arranged between the gas supply source B1 and the sample vaporization chamber 220.

The sample vaporization chamber 220 is provided with a septum 221 for inserting an adsorption part SP1. The adsorption part SP1 is a device used in the solid phase micro extraction method and includes a fiber for adsorbing a sample. The solid phase micro extraction method is a method for extracting and concentrating volatile components generated from a liquid or solid sample using the adsorption part SP1. The fiber is housed inside a needle. In the adsorption part SP1 in the present embodiment, a fused silica fiber is coated with a liquid phase (adsorption phase). The liquid phase may be, for example, polydimethylsiloxane (PDMS), divinylbenzene (DVB), or the like.

In the present embodiment, the surface area of the coated liquid phase is 44.0 mm² or more. More specifically, the surface area of the liquid phase is, for example, 44.0 mm² or 62.8 mm². Further, the liquid phase amount of the adsorption part SP1 in the present embodiment is 3.8 µL or more. More specifically, the liquid phase amount of the adsorption part SP1 is, for example, 3.8 µL or 11.8 µL. The surface area of the liquid phase of an adsorption part used in a general solid phase micro extraction method is 9.4 mm², and the liquid phase amount is 0.6 µL.

That is, the surface area and the liquid phase amount of the liquid phase of the adsorption part SP1 in the present embodiment are larger than the surface area and the liquid phase amount of the liquid phase of an adsorption part used in such a general solid phase micro extraction method. If the surface area and the liquid phase amount of the liquid phase are large, the amount of sample gas that can be adsorbed by the adsorption part SP1 increases. Note that the adsorption part SP1 in the present embodiment may be for manual use or for an autosampler.

As shown in FIG. 1, after a sample is adsorbed by the adsorption part SP1, the adsorption part SP1 is inserted into the sample vaporization chamber 220 via the septum 221. The heater Ht1 heats the sample vaporization chamber 220 based on a control signal received from the control device 100. The sample adsorbed by the adsorption part SP1 is desorbed from the adsorption part SP1 by the heat from the heater Ht1. Hereinafter, the process of desorbing the sample adsorbed by the adsorption part SP1 by heating with the heater Ht1 is referred to as "thermal desorption."

The sample desorbed by thermal desorption is introduced into the separation column CL1 in the column oven Ov1 together with the carrier gas supplied from the gas supply source B1. Various compounds contained in the sample gas are separated while passing through the separation column CL1 and are sequentially introduced into the detector 230. As a result, the gas chromatograph 200 separates and detects the components contained in the sample gas.

The control device 100 includes a processor 110 and a storage device 120. The processor 110 is a computing entity (computer) that executes various processes by executing various programs. The processor 110 includes, for example, a CPU (Central Processing Unit), an MPU (Micro-Processing Unit), and the like. The processor 110 has a function of executing various processes by executing programs, but a part or all of these functions may be a dedicated integrated circuit for a specific application such as an FPGA (Field Programmable Gate Array) or an ASIC (Application Specific Integrated Circuit).

That is, the term "processor" is not limited to a processor in a narrow sense that executes processing by a stored program method, such as a CPU or an MPU, but may include a hard-wired circuit such as an ASIC or an FPGA. Therefore, the processor 110 can also be read as a processing circuitry, in which processing is predefined by computer-readable code and/or a hard-wired circuit. Note that the processor 110 may be configured with a single chip or a plurality of chips.

Furthermore, the processor 110 and related processing circuits may be configured with a plurality of computers interconnected by wire or wirelessly via a local area network or a wireless network. The processor 110 and related processing circuits may be configured with a cloud computer that performs calculations remotely based on input data and outputs the calculation results to other devices at a remote location.

The storage device 120 includes a volatile memory such as a DRAM (Dynamic Random Access Memory) or an SRAM (Static Random Access Memory), and a non-volatile memory such as a ROM (Read Only Memory) or a flash memory. The storage device 120 may be one or more non-transitory computer readable media, or one or more computer readable storage media. For example, the storage device 120 may be an optical medium such as an SD card, a hard disk drive (Hard Disc: HD), a solid-state drive (SSD), a CD, or a DVD. As shown in FIG. 1, a control program P1 is stored in the storage device 120.

The input device 300 is a device for receiving instructions from a user. The input device 300 may be, for example, a keyboard, a mouse, a button, or the like. The display device 400 is a device for displaying information such as detection results to the user. The display device 400 is realized by, for example, a liquid crystal or organic EL (Electro Luminescence) monitor. Note that the input device 300 and the display device 400 may be integrally provided as a touch screen.

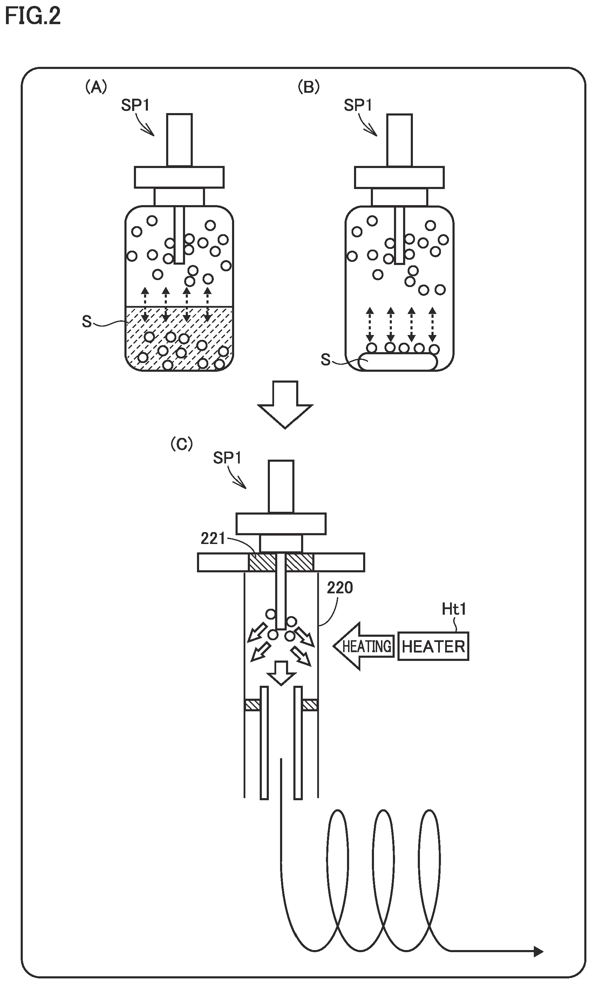

FIG. 2 is a diagram for explaining adsorption and desorption of a sample to and from the adsorption part SP1. FIG. 2(A) is a diagram showing an example of adsorbing volatile components of a liquid sample S. FIG. 2(B) is a diagram showing an example of adsorbing volatile components of a solid sample S. As shown in FIGS. 2(A) and 2(B), regardless of whether the sample S is a liquid or a solid, the volatile components of the sample S vaporized by heating are adsorbed to the adsorption part SP1.

FIG. 2(C) shows an example of desorbing the sample S adsorbed on the adsorption part SP1. As shown in FIG. 2(C), when the sample vaporization chamber 220 is heated by the heater Ht1, the sample S is desorbed from the adsorption part SP1 and introduced into the separation column CL1.

As described above, in the present embodiment, the surface area of the liquid phase in the adsorption part SP1 is 44.0 mm² or more, and the liquid phase amount is 3.8 µL or more. Such an adsorption part SP1 having a large-capacity liquid phase can adsorb a larger amount of sample gas compared to the adsorption part described above in which the surface area of the liquid phase is 9.4 mm² and the liquid phase amount is 0.6 µL. However, if the amount of adsorbed sample gas is large, it is necessary to desorb a large amount of sample gas from the adsorption part SP1, which may reduce the desorption efficiency.

If the gas chromatograph 200 employs a split injection method, the desorption efficiency would improve by increasing the split ratio, but the amount of sample gas introduced into the separation column CL1 would be reduced, resulting in a decrease in the sensitivity of the chromatogram. Therefore, in the gas chromatograph analysis system 1000 of the present embodiment, the supply pressure of the carrier gas is increased during the period of thermal desorption. The split injection method is an injection method in which only a part of the heat-vaporized sample is introduced into the separation column CL1, and the majority of the heat-vaporized sample is discharged.

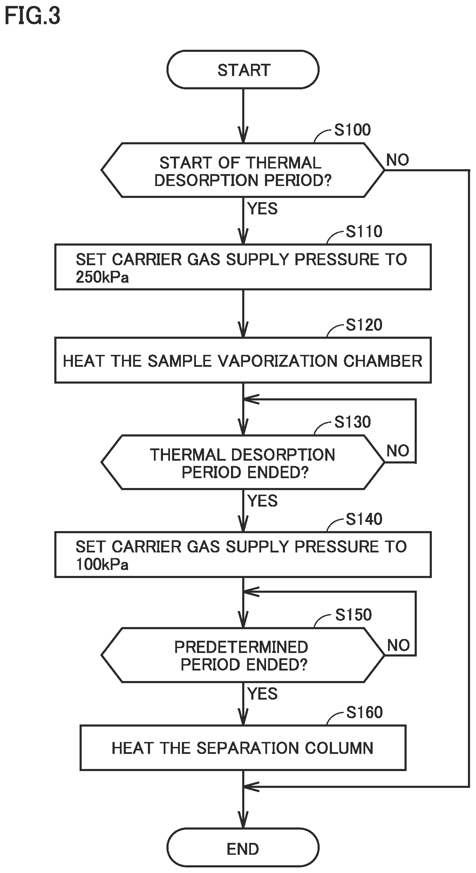

FIG. 3 is a diagram showing a flowchart for increasing the supply pressure of the carrier gas during the thermal desorption period. The control device 100 realizes the processing of the flowchart of FIG. 3 by executing the control program P1 stored in the storage device 120.

The control device 100 determines whether the thermal desorption period has started (step S100). When an analysis is performed by an autosampler, the control device 100 determines whether the thermal desorption period has started according to a program that controls the autosampler. When an analysis is performed by an autosampler, the process automatically shifts to the thermal desorption step after the adsorption part SP1 is inserted into the sample vaporization chamber 220. On the other hand, when an analysis is performed manually, for example, when an instruction to start thermal desorption is received from a user, the control device 100 determines that the thermal desorption period has started.

If the thermal desorption period has not started (NO in step S100), the control device 100 ends the process. If thermal desorption has started (YES in step S100), the control device 100 sets the supply pressure of the carrier gas to 250 kPa (step S110). The 250 kPa set as the supply pressure is a predetermined value to maximize the desorption efficiency of the sample. The 250 kPa set as the supply pressure is determined based on experiments and simulations. In other words, the control device 100 controls the adjustment device 210 such that the supply pressure of the carrier gas becomes 250 kPa. Note that 250 kPa in step S110 may correspond to the "first pressure" in the present disclosure.

The control device 100 causes the sample vaporization chamber 220 to be heated (step S120). That is, the control device 100 drives the heater Ht1. Thereafter, the control device 100 determines whether the thermal desorption period has ended (step S130). The thermal desorption period is a predetermined period, for example, 1 minute from the start of thermal desorption. The thermal desorption period of 1 minute is a predetermined period to maximize the desorption efficiency of the sample. The thermal desorption period is determined based on experiments and simulations. Note that, in some aspects, the thermal desorption period may be another period such as 2 minutes or 3 minutes. If the thermal desorption period has not ended (NO in step S130), the control device 100 repeats the process of step S130. That is, the control device 100 waits until the thermal desorption period elapses.

When the thermal desorption period has elapsed (YES in step S130), the control device 100 sets the supply pressure of the carrier gas to 100 kPa (step S140). In other words, the control device 100 controls the adjustment device 210 such that the supply pressure of the carrier gas becomes 100 kPa. In step S130, the control device 100 stops driving the heater Ht1.

Note that 100 kPa in step S140 may correspond to the "second pressure" in the present disclosure. The supply pressure of the carrier gas in step S140 is a pressure lower than the supply pressure of the carrier gas in step S110. The 100 kPa in step S 140 is a supply pressure predetermined according to the type of carrier gas so that the sample gas can be appropriately separated in the separation column CL1.

Subsequently, the control device 100 determines whether a predetermined period has elapsed (step S150). The predetermined period is a predetermined period, for example, a period of 5 seconds, 10 seconds, or the like after the thermal desorption has elapsed. If the predetermined period has not elapsed (NO in step S150), the control device 100 repeats the process of step S150. That is, the control device 100 waits until the predetermined period elapses. The predetermined period in step S150 is a period for stabilizing the supply pressure at 100 kPa.

When the predetermined period has elapsed (YES in step S150), the control device 100 heats the separation column CL1 (step S160). That is, the control device 100 drives the heater Ht2. The sample desorbed in the sample vaporization chamber 220 passes through the inside of the separation column CL1 in a gaseous state as the separation column CL1 is heated, and is introduced into the detector 230 together with the carrier gas.

As described above, in the present embodiment, during the thermal desorption period, the supply pressure of the carrier gas is increased to be higher than the supply pressure when separating the sample gas in the separation column CL1. As a result, in the gas chromatograph analysis system 1000 of the present embodiment, in the thermal desorption step, the supply of high-pressure carrier gas into the sample vaporization chamber 220 promotes the desorption of the sample gas from the adsorption part SP1, thereby suppressing a decrease in the desorption efficiency of the sample. As a result, in the gas chromatograph analysis system 1000, even for components with weak retention in the separation column CL1, the broadening of the peak shape in the chromatogram detected by the detector 230 is suppressed.

Furthermore, compared to the case where the split ratio is increased, in the gas chromatograph analysis system 1000 of the present embodiment, since the adsorbed sample gas is not discharged, the amount of sample gas introduced into the separation column CL1 is not reduced. Further, in the gas chromatograph analysis system 1000 of the present embodiment, by providing the waiting time of the predetermined period in step S150, the separation of the sample gas in the separation column CL1 can be started after the supply pressure is stabilized at 100 kPa.

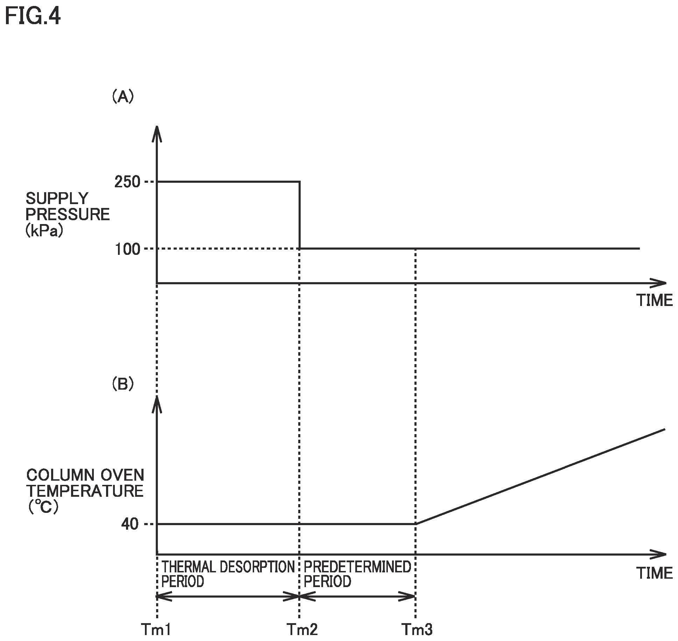

FIG. 4 is a timing chart showing the supply pressure and the column oven temperature in the present embodiment. In FIG. 4(A), the vertical axis indicates the supply pressure of the carrier gas, and the horizontal axis indicates the elapsed time. In FIG. 4(B), the vertical axis indicates the column oven temperature, and the horizontal axis indicates the elapsed time. At time Tm1, thermal desorption is started.

With the start of thermal desorption, the supply pressure of the carrier gas is controlled to 250 kPa. At time Tm2 when the thermal desorption period ends, the supply pressure of the carrier gas is controlled to 100 kPa. Thereafter, at time Tm3 when a predetermined period has elapsed, the heater Ht2 is driven, and the temperature of the column oven Ov1 starts to rise.

As described above, in the present embodiment, by increasing the supply pressure of the carrier gas during the thermal desorption period to be higher than the supply pressure when separating the sample gas in the separation column CL1, the desorption of the sample gas can be promoted, and a decrease in the desorption efficiency of the sample can be suppressed.

### [Modifications]

In the above example, an example was described in which the control device 100, the gas chromatograph 200, the input device 300, and the display device 400 are provided separately. However, the control device 100, the gas chromatograph 200, the input device 300, and the display device 400 may be integrally provided. That is, the gas chromatograph 200 may include the control device 100, the input device 300, and the display device 400.

In the above example, an example was described in which the surface area of the adsorption part SP1 is 44.0 mm² or more, and the liquid phase amount is 3.8 µL or more. However, in some aspects, the surface area of the adsorption part SP1 may be less than 44.0 mm². Further, the liquid phase amount may also be less than 3.8 µL. Even when the amount of sample gas that can be adsorbed by the adsorption part SP1 is small, if a sample gas with strong interaction with the adsorption part SP1 is adsorbed by the adsorption part SP1, the desorption efficiency of the sample in the sample vaporization chamber 220 decreases. Even in such a case, as described above, by increasing the supply pressure of the carrier gas during the thermal desorption period to be higher than the supply pressure when separating the sample gas in the separation column CL1, the desorption of the sample gas can be promoted, and a decrease in the desorption efficiency of the sample can be suppressed.

In the above example, the predetermined period in step S150 was provided for stabilizing the supply pressure, but in some aspects, the heating of the separation column CL1 may be started when the supply pressure drops to 100 kPa. That is, the predetermined period in step S150 may not be provided.

In the above example, an example was described in which the supply pressure of the carrier gas during the thermal desorption period is 250 kPa, and the supply pressure of the carrier gas after thermal desorption is 100 kPa, but in some aspects, the supply pressure of the carrier gas may be other values. For example, the supply pressure of the carrier gas during the thermal desorption period may be in the range of 230 kPa to 270 kPa, and the supply pressure of the carrier gas after thermal desorption may be in the range of 80 kPa to 120 kPa.

### [Aspects]

It is understood by those skilled in the art that the plurality of exemplary embodiments described above are specific examples of the following aspects.

(Item 1) A gas chromatograph analysis system according to one aspect is a gas chromatograph analysis system for separating components in a sample gas introduced by a solid phase micro extraction method. The gas chromatograph analysis system comprises: a gas chromatograph for separating components in the sample gas introduced by the solid phase micro extraction method; and a control device for controlling the gas chromatograph. The gas chromatograph includes: a sample vaporization chamber into which an adsorption part that has adsorbed the sample gas is inserted; a gas supply source for supplying a carrier gas to the sample vaporization chamber; an adjustment device for adjusting the amount of the carrier gas supplied to the sample vaporization chamber by a supply pressure applied to the carrier gas; a separation column into which the sample gas desorbed from the adsorption part is introduced from the sample vaporization chamber; and a detector for detecting components in the sample gas that has passed through the separation column. The control device controls the adjustment device such that the supply pressure becomes a first pressure during a desorption period in which the sample gas is desorbed from the adsorption part, and controls the adjustment device such that the supply pressure becomes a second pressure lower than the first pressure after the desorption period ends.

According to the gas chromatograph analysis system described in item 1, in a gas chromatograph analysis system into which a sample gas is introduced by the solid phase micro extraction method, it is possible to suppress a decrease in desorption efficiency when desorbing a sample from an adsorption part.

(Item 2) In the gas chromatograph analysis system according to item 1, the gas chromatograph further comprises a first heating device for heating the sample vaporization chamber. The control device drives the first heating device to desorb the sample gas adsorbed on the adsorption part.

According to the gas chromatograph analysis system described in item 2, the sample can be desorbed by heating.

(Item 3) In the gas chromatograph analysis system according to item 1 or 2, the gas chromatograph further comprises a second heating device for heating the separation column. The control device drives the second heating device based on the elapsing of a predetermined period after the desorption period ends.

According to the gas chromatograph analysis system described in item 3, it is possible to control the passage of the sample through the separation column CL1 after the supply pressure has been stabilized at the second pressure.

(Item 4) In the gas chromatograph analysis system according to any one of items 1 to 3, the surface area of the adsorption phase of the adsorption part is 44.0 mm² or more.

According to the gas chromatograph analysis system described in item 4, an adsorption part with a large adsorption phase surface area can be applied.

(Item 5) In the gas chromatograph analysis system according to any one of items 1 to 3, the liquid phase amount of the adsorption part is 3.8 µL or more.

According to the gas chromatograph analysis system described in item 5, an adsorption part with a large liquid phase amount can be applied.

(Item 6) A gas chromatograph analyzer according to one aspect is a gas chromatograph analyzer for separating components in a sample gas introduced by a solid phase micro extraction method. The gas chromatograph analyzer comprises: a sample vaporization chamber into which an adsorption part that has adsorbed the sample gas is inserted; a gas supply source for supplying a carrier gas to the sample vaporization chamber; an adjustment device for adjusting the amount of the carrier gas supplied to the sample vaporization chamber by a supply pressure applied to the carrier gas; a separation column into which the sample gas desorbed from the adsorption part is introduced from the sample vaporization chamber; and a detector for detecting components in the sample gas that has passed through the separation column. The adjustment device applies a supply pressure of a first pressure to the carrier gas during a desorption period in which the sample gas is desorbed from the adsorption part, and applies a supply pressure of a second pressure lower than the first pressure to the carrier gas after the desorption period ends.

According to the gas chromatograph analyzer described in item 6, in a gas chromatograph analyzer into which a sample gas is introduced by the solid phase micro extraction method, it is possible to suppress a decrease in desorption efficiency when desorbing a sample from an adsorption part.

(Item 7) A control method for a gas chromatograph analyzer according to one aspect is a control method for a gas chromatograph analyzer for separating components in a sample gas introduced by a solid phase micro extraction method. The gas chromatograph analyzer includes: a sample vaporization chamber into which an adsorption part that has adsorbed the sample gas is inserted; a gas supply source for supplying a carrier gas to the sample vaporization chamber; an adjustment device for adjusting the amount of the carrier gas supplied to the sample vaporization chamber by a supply pressure applied to the carrier gas; a separation column into which the sample gas desorbed from the adsorption part is introduced from the sample vaporization chamber; and a detector for detecting components in the sample gas that has passed through the separation column. The control method includes, as a process executed by a computer that controls the gas chromatograph analyzer: a step of controlling the adjustment device such that the supply pressure becomes a first pressure during a desorption period in which the sample gas is desorbed from the adsorption part; and a step of controlling the adjustment device such that the supply pressure becomes a second pressure lower than the first pressure after the desorption period ends.

According to the control method for a gas chromatograph analyzer described in item 7, in a gas chromatograph analyzer into which a sample gas is introduced by the solid phase micro extraction method, it is possible to suppress a decrease in desorption efficiency when desorbing a sample from an adsorption part.

The embodiments disclosed herein should be considered in all respects as illustrative and not restrictive. The scope of the present invention is indicated by the claims rather than by the description of the embodiments, and all modifications within the meaning and scope equivalent to the claims are intended to be included.

### REFERENCE SIGNS LIST

100 Control device, 110 Processor, 120 Storage device, 200, 200A Gas chromatograph, 210 Adjustment device, 220 Sample vaporization chamber, 221 Septum, 230 Detector, 300 Input device, 400 Display device, 1000 Gas chromatograph analysis system, B1 Gas supply source, CL1 Separation column, Ht1, Ht2 Heater, Ov1 Column oven, P1 Control program, S Sample, SP1 Adsorption part, Tm1 to Tm3 Timing.

## Claims

1. A gas chromatograph analysis system for separating components in a sample gas introduced by a solid phase micro extraction method, the system comprising:
a gas chromatograph for separating the components in the sample gas introduced by the solid phase micro extraction method; and
a control device for controlling the gas chromatograph,
wherein the gas chromatograph includes:
a sample vaporization chamber into which an adsorption part that has adsorbed the sample gas is inserted;
a gas supply source for supplying a carrier gas to the sample vaporization chamber;
an adjustment device for adjusting an amount of the carrier gas supplied to the sample vaporization chamber by a supply pressure applied to the carrier gas;
a separation column into which the sample gas desorbed from the adsorption part is introduced from the sample vaporization chamber; and
a detector for detecting the components in the sample gas that has passed through the separation column, and
wherein the control device:
controls the adjustment device such that the supply pressure becomes a first pressure during a desorption period in which the sample gas is desorbed from the adsorption part; and
controls the adjustment device such that the supply pressure becomes a second pressure lower than the first pressure after the desorption period ends.

2. The gas chromatograph analysis system according to claim 1,
wherein the gas chromatograph further comprises a first heating device for heating the sample vaporization chamber, and
the control device drives the first heating device to desorb the sample gas adsorbed on the adsorption part.

3. The gas chromatograph analysis system according to claim 1 or claim 2,
wherein the gas chromatograph further comprises a second heating device for heating the separation column, and
the control device drives the second heating device based on an elapsing of a predetermined period after the desorption period ends.

4. The gas chromatograph analysis system according to claim 1, wherein a surface area of an adsorption phase of the adsorption part is 44.0 mm² or more.

5. The gas chromatograph analysis system according to claim 1, wherein a liquid phase amount of the adsorption part is 3.8 µL or more.

6. A gas chromatograph analyzer for separating components in a sample gas introduced by a solid phase micro extraction method, the analyzer comprising:
a sample vaporization chamber into which an adsorption part that has adsorbed the sample gas is inserted;
a gas supply source for supplying a carrier gas to the sample vaporization chamber;
an adjustment device for adjusting an amount of the carrier gas supplied to the sample vaporization chamber by a supply pressure applied to the carrier gas;
a separation column into which the sample gas desorbed from the adsorption part is introduced from the sample vaporization chamber; and
a detector for detecting the components in the sample gas that has passed through the separation column,
wherein the adjustment device:
applies the supply pressure of a first pressure to the carrier gas during a desorption period in which the sample gas is desorbed from the adsorption part; and
applies the supply pressure of a second pressure lower than the first pressure to the carrier gas after the desorption period ends.

7. A control method for a gas chromatograph analyzer for separating components in a sample gas introduced by a solid phase micro extraction method,
wherein the gas chromatograph analyzer includes:
a sample vaporization chamber into which an adsorption part that has adsorbed the sample gas is inserted;
a gas supply source for supplying a carrier gas to the sample vaporization chamber;
an adjustment device for adjusting an amount of the carrier gas supplied to the sample vaporization chamber by a supply pressure applied to the carrier gas;
a separation column into which the sample gas desorbed from the adsorption part is introduced from the sample vaporization chamber; and
a detector for detecting the components in the sample gas that has passed through the separation column,
the control method comprising, as a process executed by a computer that controls the gas chromatograph analyzer:
a step of controlling the adjustment device such that the supply pressure becomes a first pressure during a desorption period in which the sample gas is desorbed from the adsorption part; and
a step of controlling the adjustment device such that the supply pressure becomes a second pressure lower than the first pressure after the desorption period ends.
